# EUROPEAN PATENT SPECIFICATION

(11) **EP 2 772 103 B1**
(45) Date of publication and mention of the grant of the patent: **01.07.2020**
(21) Application number: 12842839.8
(22) Date of filing: 16.10.2012
(51) Int. Cl.: H04W 52/02

(54) **APPARATUS AND METHOD FOR THE MANAGEMENT OF RECEPTION PARAMETERS IN A COMMUNICATION SYSTEM**
VORRICHTUNG UND VERFAHREN ZUR VERWALTUNG VON EMPFANGSPARAMETERN IN EINEM KOMMUNIKATIONSSYSTEM
APPAREIL ET PROCÉDÉ POUR LA GESTION DE PARAMÈTRES DE RÉCEPTION DANS UN SYSTÈME DE COMMUNICATIONS

(30) Priority: 27.10.2011 US 201113283345
(43) Date of publication of application: 03.09.2014
(73) Proprietor: Nokia Technologies Oy, 02610 Espoo (FI)
(72) Inventor: LUNDEN, Jari, FI-02230 Espoo (FI); VIRTEJ, Elena, FI-02100 Espoo (FI); MOISIO, Martti, FI-04480 Haarajoki (FI); MALKAMÄKI, Esa, FI-02130 Espoo (FI)
(74) Representative: Laine IP Oy
(86) International application number: PCT/FI2012/050988
(87) International publication number: WO 2013/060929

(56) References cited:
- EP-A1- 1 798 998
- EP-A1- 1 973 355
- EP-A1- 2 157 830
- WO-A1-2005/002137
- WO-A1-2009/120605
- WO-A1-2011/060997
- WO-A1-2011/064696
- US-A1- 2004 185 918
- US-A1- 2008 181 127
- US-A1- 2010 111 033
- US-A1- 2010 128 645
- US-A1- 2012 263 051

## Description

### TECHNICAL FIELD

The present invention is directed, in general, to communication systems and, in particular, to an apparatus, method and a computer program product for the management of reception parameters in a communication system.

### BACKGROUND

Long term evolution ("LTE") of the Third Generation Partnership Project ("3GPP"), also referred to as 3GPP LTE, refers to research and development involving the 3GPP LTE Release 8 and beyond as part of an ongoing effort across the industry aimed at identifying technologies and capabilities that can improve systems such as the universal mobile telecommunication system ("UMTS"). The notation "LTE-A" is generally used in the industry to refer to further advancements in LTE. The goals of this broadly based project include improving communication efficiency, lowering costs, improving services, making use of new spectrum opportunities, and achieving better integration with other open standards.

The evolved universal terrestrial radio access network ("E-UTRAN") in 3GPP includes base stations providing user plane (including packet data convergence protocol/radio link control/medium access control/physical layers) and control plane (including radio resource control/ packet data convergence protocol /radio link control/medium access control/physical layers) protocol terminations towards wireless communication devices such as cellular telephones. A wireless communication device or terminal is generally known as user equipment (also referred to as "UE"). A base station ("BS") is an entity or network element of a communication system or network often referred to as a Node B or an NB. Particularly in the E-UTRAN, an "evolved" base station is referred to as an eNodeB or an eNB. For details about the overall architecture of the E-UTRAN, see 3GPP Technical Specification ("TS") 36.300 v.10.5.0 (2011-09), which is incorporated herein by reference. For details of the radio resource control management, see 3GPP TS 25.331 v.10.5.0 (2011-09) and 3GPP TS 36.331 v.10.3.0 (2011-09), which are incorporated herein by reference.

A current topic under discussion in the wireless industry for improving performance of "smart" cellular telephones relates to the management and optimization of power consumption where one possible way is discontinuous reception ("DRX") operation. Discontinuous reception is a term used to describe a process employed in communication systems to conserve the battery of user equipment. In discontinuous reception, the user equipment and a serving network element determine time slots in which data transfer occurs between a network element (such as an access point or base station) and the user equipment. During other times, the user equipment may turn off its transceiver (e.g., the user equipment may stop monitoring the physical downlink control channel ("PDCCH")), thereby conserving charge in its battery during such idle times.

An unresolved problem is how to configure discontinuous reception parameters (such as DRX cycle length, DRX cycle offset, length of on duration, DRX inactivity timer length) for the user equipment so that the discontinuous reception configuration matches the needs and activity level of the user equipment without causing unnecessary signaling overhead between the user equipment and a network element. Present discontinuous reception configuration and control mechanisms are not generally responsive to the needs and activities of single or multiple applications running in parallel in the user equipment. Improved adaptability of discontinuous reception configuration and control mechanisms to time-varying traffic profiles and to application requirements in the user equipment would produce improved user equipment and network performance as well as conserve energy for the operation of the user equipment.

Document EP1798998 discloses a method for user equipment directed radio resource control in a UMTS network. In this method, a UE determines it is done with exchanging data, and then proceeds to tear down a signaling connection.

### SUMMARY OF THE INVENTION

These and other problems are generally solved or circumvented, and technical advantages are generally achieved, by embodiments of the present invention, which include an apparatus, method and system for the management of reception parameters in a communication system. In one embodiment, the method includes determining a power saving profile based on a state of the apparatus, a user and applications, providing the power saving profile via a signaling message to a serving network element, wherein said power saving profile indicates either a preference for less emphasis on power saving and more emphasis on performance, or a preference for more emphasis on power saving and less emphasis on performance, and wherein said power saving profile is a discontinuous reception profile and said discontinuous reception profile depends on at least one of: a user setting of the user equipment, a user activity or inactivity, an application running in the user equipment, an expected traffic characteristic associated with the application running in the user equipment, a history of traffic characteristics for communication dependent on a time of day, a user calendar information, a location information, a sensor parameter of the user equipment and a history of application-dependent traffic characteristics of the user equipment.

The foregoing has outlined rather broadly the features and technical advantages of some of the embodiments of the present invention in order that the detailed description of some examples of embodiments of the invention that follows may be better understood. Additional features and advantages of the embodiments of the invention will be described hereinafter, which form the subject of the accompanying claims. It should be appreciated by those skilled in the art that the conception and specific embodiment disclosed may be readily utilized as a basis for modifying or designing other structures or processes for carrying out the same purposes of the present invention.

### BRIEF DESCRIPTION OF THE DRAWINGS

For a more complete understanding of some examples of embodiments of the invention reference is now made to the following description taken in conjunction with the accompanying drawings, which are by way of example only, and in which:
FIGUREs 1 and 2 illustrate system level diagrams of embodiments of communication systems including a base station and wireless communication devices that provide an environment for application of the principles of the present invention;
FIGUREs 3 to 5 illustrate system level diagrams of embodiments of communication systems including wireless communication systems that provide an environment for application of the principles of the present invention;
FIGURE 6 illustrates a system level diagram of an embodiment of portions of a communication system for application of the principles of the present invention; and
FIGURE 7 illustrates a flow diagram of an embodiment of a method of operating a communication system in accordance with the principles of the present invention.

### DETAILED DESCRIPTION OF ILLUSTRATIVE EMBODIMENTS

The making and using of some examples of embodiments of the invention are discussed in detail below. It should be appreciated, however, that the embodiments of the present invention provides many applicable inventive concepts that can be embodied in a wide variety of specific contexts. The specific examples of embodiments discussed are merely illustrative of specific ways to make and use the invention, and do not limit the scope of the invention. In view of the foregoing, the present invention will be described with respect to exemplary embodiments (which are by way of example only) in a specific context of an apparatus, method and system for management of reception parameters in a communication system. The apparatus, method and system are applicable, without limitation, to any communication system including existing and future cellular technologies including 3GPP technologies (*i.e.,* UMTS, LTE, and future variants such as 4th generation ("4G") communication systems) and a wireless local area network ("WLAN") operable under IEEE standard 802.11 (or a worldwide interoperability for microwave access ("WiMAX") communication system operable under IEEE standard 802.16). Additionally, WLAN communications, communication systems, modules, modes or the like generally include non-cellular equivalents such as, without limitation, technologies related to WiMAX, WiFi, industrial, scientific and medical ("ISM"), global positioning system ("GPS") and Bluetooth.

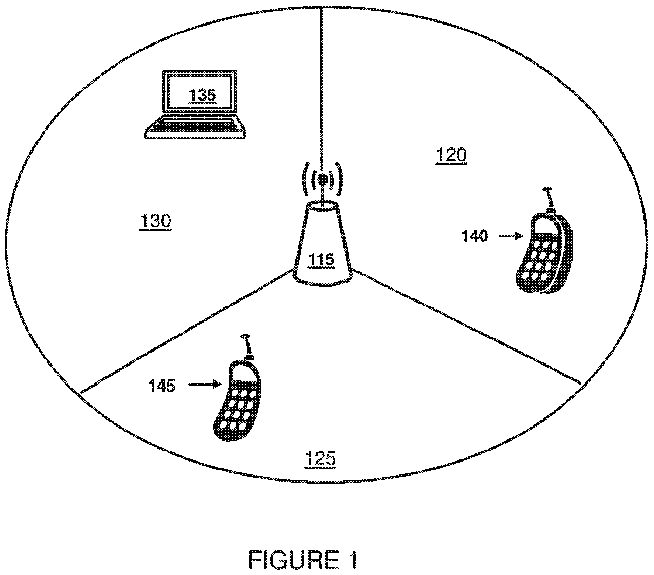

Turning now to FIGURE 1, illustrated is a system level diagram of an embodiment of a communication system including a base station 115 and wireless communication devices (*e.g.,* user equipment) 135, 140, 145 that provides an environment for application of the principles of some embodiments of the present invention. The base station 115 is coupled to a public switched telephone network (not shown). The base station 115 is configured with a plurality of antennas to transmit and receive signals in a plurality of sectors including a first sector 120, a second sector 125, and a third sector 130, each of which typically spans 120 degrees. Although FIGURE 1 illustrates one wireless communication device (*e.g.,* wireless communication device 140) in each sector (*e.g.* the first sector 120), a sector (*e.g.* the first sector 120) may generally contain a plurality of wireless communication devices. In an alternative embodiment, a base station 115 may be formed with only one sector (*e.g.* the first sector 120), and multiple base stations may be constructed to transmit according to co-operative multi-input/multi-output ("C-MIMO") operation, *etc.*

The sectors (*e.g.* the first sector 120) are formed by focusing and phasing radiated signals from the base station antennas, and separate antennas may be employed per sector (*e.g.* the first sector 120). The plurality of sectors 120, 125, 130 increases the number of subscriber stations (*e.g.,* the wireless communication devices 135, 140, 145) that can simultaneously communicate with the base station 115 without the need to increase the utilized bandwidth by reduction of interference that results from focusing and phasing base station antennas. While the wireless communication devices 135, 140, 145 are part of a primary communication system, the wireless communication devices 135, 140, 145 and other devices such as machines (not shown) may be a part of a secondary communication system to participate in, without limitation, device-to-device and machine-to-machine communications or other communications.

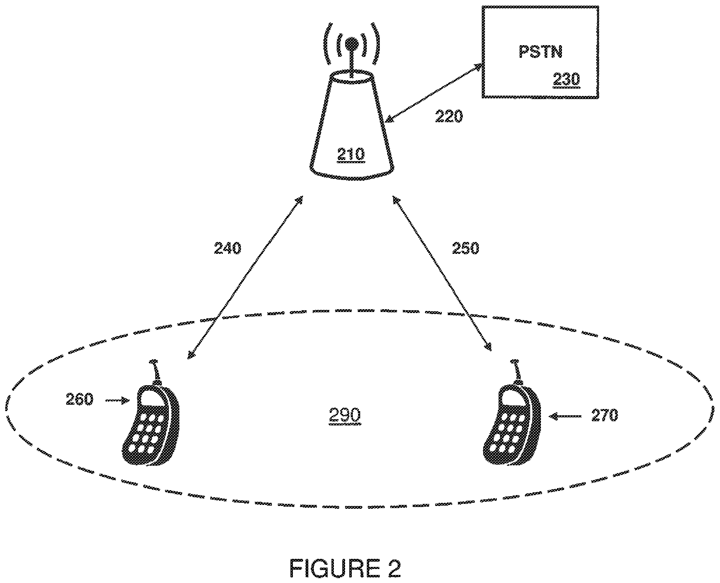

Turning now to FIGURE 2, illustrated is a system level diagram of an embodiment of a communication system including a base station 210 and wireless communication devices (*e.g.,* user equipment) 260, 270 that provides an environment for application of the principles of some embodiments of the present invention. The communication system includes the base station 210 coupled by communication path or link 220 (*e.g.,* by a fiber-optic communication path) to a core telecommunications network such as public switched telephone network ("PSTN") 230. The base station 210 is coupled by wireless communication paths or links 240, 250 to the wireless communication devices 260, 270, respectively, that lie within its cellular area 290.

In operation of the communication system illustrated in FIGURE 2, the base station 210 communicates with each wireless communication device 260, 270 through control and data communication resources allocated by the base station 210 over the communication paths 240, 250, respectively. The control and data communication resources may include frequency and time-slot communication resources in frequency division duplex ("FDD") and/or time division duplex ("TDD") communication modes. While the wireless communication devices 260, 270 are part of a primary communication system, the wireless communication devices 260, 270 and other devices such as machines (not shown) may be a part of a secondary communication system to participate in, without limitation, device-to-device and machine-to-machine communications or other communications.

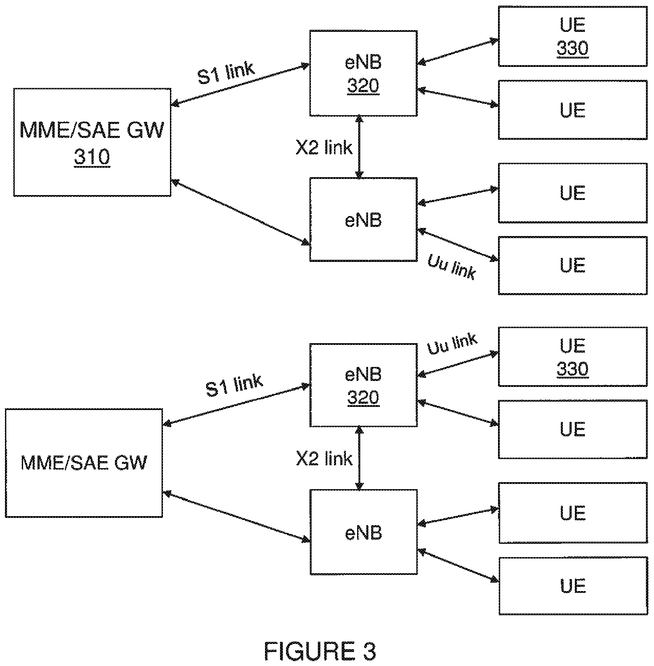

Turning now to FIGURE 3, illustrated is a system level diagram of an embodiment of a communication system including a wireless communication system that provides an environment for the application of the principles of some embodiments of the present invention. The wireless communication system may be configured to provide evolved UMTS terrestrial radio access network ("E-UTRAN") universal mobile telecommunications services. A mobility management entity/system architecture evolution gateway ("MME/SAE GW," one of which is designated 310) provides control functionality for an E-UTRAN node B (designated "eNB," an "evolved node B," also referred to as a "base station," one of which is designated 320) via an S1 communication link (ones of which are designated "S1 link"). The base stations 320 communicate via X2 communication links (ones of which are designated "X2 link"). The various communication links are typically fiber, microwave, or other high-frequency metallic communication paths such as coaxial links, or combinations thereof.

The base stations 320 communicate with wireless communication devices such as user equipment ("UE," ones of which are designated 330), which is typically a mobile transceiver carried by a user. Thus, communication links (designated "Uu" communication links, ones of which are designated "Uu link") coupling the base stations 320 to the user equipment 330 are air links employing a wireless communication signal such as, for example, an orthogonal frequency division multiplex ("OFDM") signal. While the user equipment 330 are part of a primary communication system, the user equipment 330 and other devices such as machines (not shown) may be a part of a secondary communication system to participate in, without limitation, device-to-device and machine-to-machine communications or other communications.

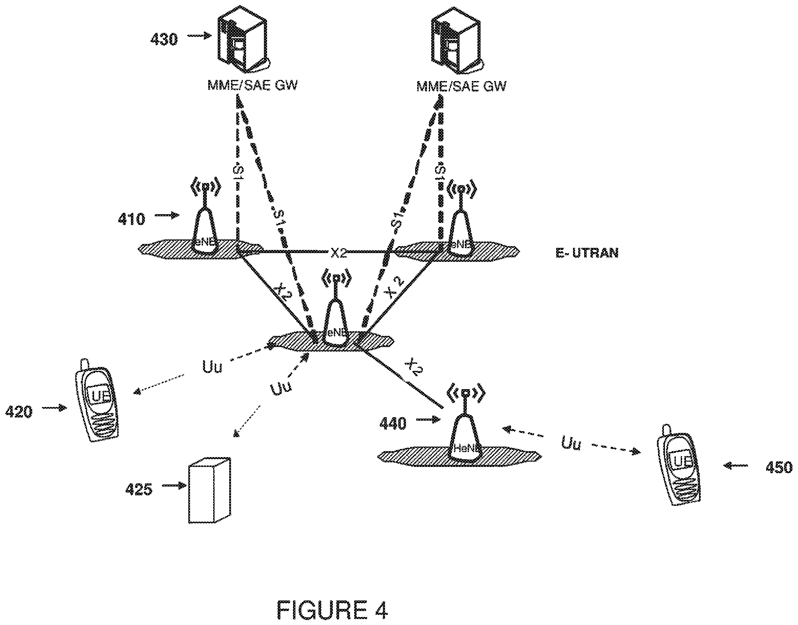

Turning now to FIGURE 4, illustrated is a system level diagram of an embodiment of a communication system including a wireless communication system that provides an environment for the application of the principles of some embodiments of the present invention. The wireless communication system provides an E-UTRAN architecture including base stations (one of which is designated 410) providing E-UTRAN user plane (packet data convergence protocol/radio link control/medium access control/physical layer) and control plane (radio resource control) protocol terminations towards wireless communication devices such as user equipment 420 and other devices such as machines 425 (*e.g.,* an appliance, television, meter, *etc*.). The base stations 410 are interconnected with X2 interfaces or communication links (designated "X2"). The base stations 410 are also connected by S1 interfaces or communication links (designated "S1") to an evolved packet core ("EPC") including a mobility management entity/system architecture evolution gateway ("MME/SAE GW," one of which is designated 430). The S1 interface supports a multiple entity relationship between the mobility management entity/system architecture evolution gateway 430 and the base stations 410. For applications supporting inter-public land mobile network ("PLMN") handover, inter-eNB active mode mobility is supported by the mobility management entity/system architecture evolution gateway 430 relocation via the S1 interface.

The base stations 410 may host functions such as radio resource management. For instance, the base stations 410 may perform functions such as internet protocol ("IP") header compression and encryption of user data streams, ciphering of user data streams, radio bearer control, radio admission control, connection mobility control, dynamic allocation of communication resources to user equipment in both the uplink and the downlink, selection of a mobility management entity at the user equipment attachment, routing of user plane data towards the user plane entity, scheduling and transmission of paging messages (originated from the mobility management entity), scheduling and transmission of broadcast information (originated from the mobility management entity or operations and maintenance), and measurement and reporting configuration for mobility and scheduling. The mobility management entity/system architecture evolution gateway 430 may host functions such as distribution of paging messages to the base stations 410, security control, termination of user plane packets for paging reasons, switching of the user plane for support of the user equipment mobility, idle state mobility control, and system architecture evolution ("SAE") bearer control. The user equipment 420 and machines 425 receive an allocation of a group of information blocks from the base stations 410.

Additionally, the ones of the base stations 410 are coupled to a home base station 440 (a device), which is coupled to devices such as user equipment 450 and/or machines (not shown) for a secondary communication system. The base station 410 can allocate secondary communication system resources directly to the user equipment 420 and machines 425, or to the home base station 440 for communications (*e.g.,* local communications) within the secondary communication system. For a better understanding of home base stations (designated "HeNB"), see 3 GPP TS 32.781 v.9.1.0 (2010-03), which is incorporated herein by reference. While the user equipment 420 and machines 425 are part of a primary communication system, the user equipment 420, machines 425 and home base station 440 (communicating with other user equipment 450 and machines (not shown)) may be a part of a secondary communication system to participate in, without limitation, device-to-device and machine-to-machine communications or other communications.

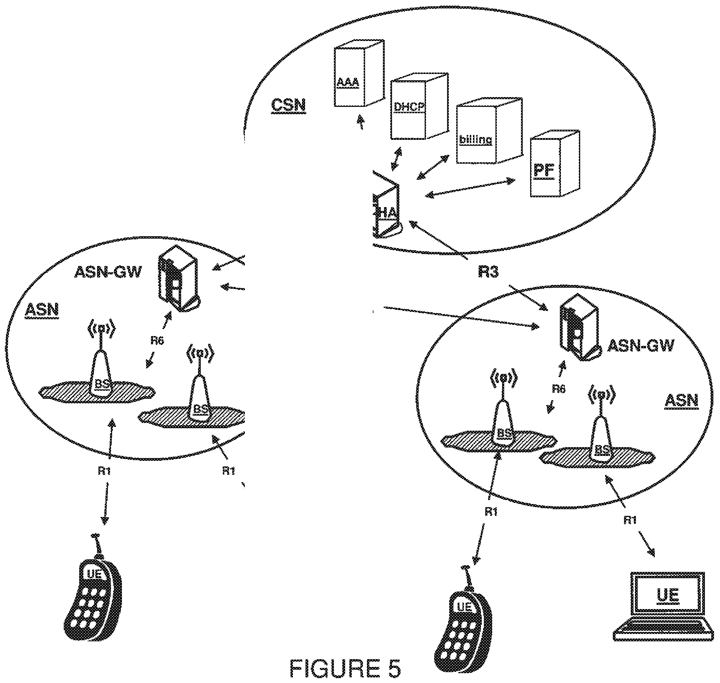

Turning now to FIGURE 5, illustrated is a system level diagram of an embodiment of a communication system including a wireless communication system that provides an environment for the application of the principles of some embodiments of the present invention. The illustrated embodiment provides a communication system such as a WiMAX communication system typically configured according to IEEE standard 802.16. Alternatively, the communication system may be configured as a cellular communication system configured to operate under 3GPP LTE specifications. The WiMAX communication system includes a core service network ("CSN") including a home access ("HA") server. The core service network provides authentication, authorization, and accounting ("AAA") functions via an AAA server, dynamic host configuration protocol ("DHCP") functions via a DHCP server, billing functions via a billing server, and a policy function ("PF") server. The AAA server validates user credentials, determines functions permissible under a given set of operating conditions and tracks network utilization for billing and other purposes. The DHCP server is used to retrieve network configuration information such as Internet protocol address assignments. The policy function server coordinates various network resources to provide requested services to authorized subscribers, and is responsible for identifying policy rules for a service that a subscriber may intend to use.

The WiMAX communication system further includes access service networks ("ASNs") that include ASN gateways (ASN-GWs") and base stations ("BSs") that provide wireless communication with user equipment ("UE"). A home access server communicates with the access service networks over R3 interfaces, and the ASN-GWs communicate with other ASN-GWs over R4 interfaces. The ASN-GWs communicate with base stations over R6 interfaces. The base stations communicate with the user equipment over wireless R1 interfaces.

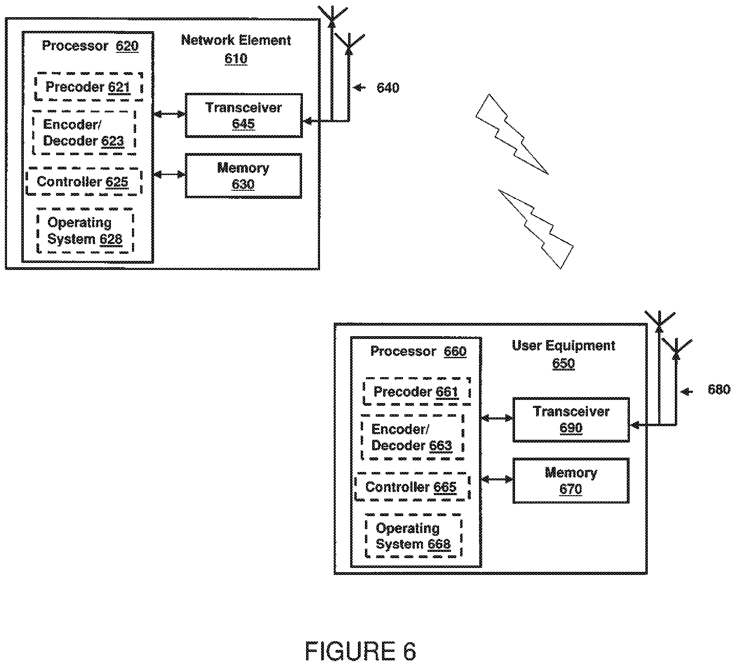

Turning now to FIGURE 6, illustrated is a system level diagram of an embodiment of portions of communication system for application of the principles of some embodiments of the present invention. The communication system may include communication elements or devices including, without limitation, a network element such as a base station or access point, a wireless communication device (*e.g.,* a subscriber station, terminal, mobile station, user equipment, machine), a network control element, a communication node, or the like. The present embodiment illustrates a network element 610 in communication with a user equipment 650. The network element 610 includes, at least, a processor 620, memory 630 that stores programs and data of a temporary or more permanent nature, an antenna 640, and a radio frequency transceiver 645 coupled to the antenna 640 and the processor 620 for bidirectional wireless communication. The network element 610 may provide point-to-point and/or point-to-multipoint communication services. The network element 610, such as a base station in a cellular network, may be coupled to another network element, such as a network control element (not shown) of a public switched telecommunication network ("PSTN"). Access may be provided using fiber optic, coaxial, twisted pair, microwave communication, or similar link coupled to an appropriate link-terminating element.

The user equipment 650 includes, at least, a processor 660, memory 670 that stores programs and data of a temporary or more permanent nature, an antenna 680, and a radio frequency transceiver 690 coupled to the antenna 680 and the processor 660 for bidirectional wireless communication. The user equipment 650 may provide point-to-point and/or point-to-multipoint communication services. Of course, the user equipment 650 may be any one of a number of wireless communication devices and may be a self-contained device intended to be carried by an end user.

The processors 620, 660 in the network element 610 and the user equipment 650, respectively, which may be implemented with one or a plurality of processing devices, perform functions associated with its operation including, without limitation, precoding of antenna gain/phase parameters (precoder 621, 661), encoding and decoding (encoder/decoder 623, 663) of individual bits forming a communication message, formatting of information, and overall control of the network element 610 and user equipment 650, respectively, including processes related to management of communication resources (by a controller 625, 665). Exemplary functions related to management of communication resources for the network element 610 include, without limitation, hardware installation, traffic management, performance data analysis, tracking of end users and equipment, configuration management, end user administration, management of wireless communication devices, management of tariffs, subscriptions, security, billing and the like. For instance, in accordance with the memory 630, the controller 625 (or processor 620 in general) of the network element 610 may execute an operating system 628, which may be embedded in the processor 620 or resident in the memory 630, to allocate communication resources (e.g., time and frequency communication resources) for transmission of voice communications and data for the benefit of the user equipment 650 and to format messages including the communication resources in a communication system. Additionally, the controller 665 (or processor 660 in general) of the user equipment 650 may execute an operating system 668, which may be embedded in the processor 660 or resident in the memory 670, to perform the functions herein including running applications for the user equipment 650.

The execution of all or portions of particular functions or processes related to management of communication resources may be performed in equipment separate from and/or coupled to the network element 610 or the user equipment 650, with the results of such functions or processes communicated for execution to the network element 610 or the user equipment 650. The processors 620, 660 in the network element 610 and the user equipment 650, respectively, may be of any type suitable to the local application environment, and may include one or more of general-purpose computers, special purpose computers, microprocessors, digital signal processors ("DSPs"), field-programmable gate arrays ("FPGAs"), application-specific integrated circuits ("ASICs"), and processors based on a multi-core processor architecture, as non-limiting examples.

The transceivers 645, 690 of the network element 610 and the user equipment 650, respectively, modulate information on to a carrier waveform for transmission by the same via the respective antenna(s) 640, 680. The transceivers 645, 690 of the network element 610 and the user equipment 650, respectively, demodulate information received via the respective antenna(s) 640, 680 for further processing by other communication elements. The transceivers 645, 690 of the network element 610 and the user equipment 650, respectively, are capable of supporting duplex operation. It should be understood that the transceivers 645, 690 of the network element 610 and the user equipment 650, respectively, may handle different types of communications (such as a cellular communication and a WLAN communication) or the network element 610 and the user equipment 650, respectively, may include multiple transceivers, wherein each transceiver handles a different type of communication.

The memories 630, 670 of the network element 610 and the user equipment 650, respectively, as introduced above, may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. The programs stored in the memories 630, 670 of the network element 610 and the user equipment 650, respectively, may include program instructions or computer program code that, when executed by an associated processor, enable the network element 610 and the user equipment 650 to perform tasks as described herein. Of course, the memories 630, 670 of the network element 610 and the user equipment 650, respectively, may form a data buffer for data transmitted to and from the same. In the case of the user equipment 650, the memory 670 may store applications (e.g., virus scan, browser and games) for use by the same. Exemplary embodiments of the system, subsystems, and modules as described herein may be implemented, at least in part, by computer software executable by processors of, for instance, the wireless communication device and the base station, or by hardware, or by combinations thereof. The systems, subsystems and modules may be embodied in the network element 610 and the user equipment 650 as illustrated and described herein.

In accordance with the user equipment 650, the processor 660 *(e.g.,* with the operating system 668) in accordance with the memory 670 is configured to determine a power saving profile based on a state (e.g., active or inactive) of the user equipment 650. The state may be disassociated from ongoing traffic monitoring at a radio layer (at the transceiver 690). The processor 660 in accordance with the memory 670 of the user equipment 650 is configured to provide the power saving profile via a signaling message to the serving network element 610 (*e.g.,* a serving base station). The power saving profile may be one of discontinuous reception profile that may depend on at least one of a user setting of the user equipment 650, a user activity of the user equipment 650, an application running in the user equipment 650, an expected traffic characteristic associated with at least one application running in the user equipment 650, a history of traffic characteristics for communications of the user equipment 650 dependent on a time of day, calendar information of the user equipment 650 based on a time of day, location information of the user equipment 650, a sensor parameter of the user equipment 650, and a history of application-dependent traffic characteristics of the user equipment 650. The power saving profile may be determined based on an interaction between at least one of the operating system 668, an application and the radio layer (the transceiver 690) of the user equipment 650.

The processor 660 in accordance with the memory 670 of the user equipment 650 is configured to select a scanning pattern, an interval, a frequency, or a configuration for interfrequency measurements based on the power saving profile. The processor 660 in accordance with the memory 670 of the user equipment 650 is also configured to receive a discontinuous reception parameter from the serving network element 610 in response to the power saving profile. The processor 660 would then apply these discontinuous reception parameters when controlling the usage of the transceiver 690. The processor 660 in accordance with the memory 670 may also alter at least one traffic characteristic of the user equipment 650 to conform to the discontinuous reception parameter. The processor 660 in accordance with the memory 670 of the user equipment 650 is still further configured to receive a defined scanning pattern, an interval, a frequency, or a configuration for interfrequency measurements from the serving network element 610 in response to the power saving profile. The power saving profile is any characteristic that defines an activity or inactivity of the user equipment 650 such as the display dimming during a state of inactivity. The power saving profile may also be any other characteristic affecting how the user equipment 650 and/or network in general handles trade-offs between power consumption and performance of the transceiver 690 (*e.g.,* preference to save power over shorter latency would cause the network to configure a longer DRX cycle). The power saving profile can include a set of user equipment 650 states that indicate a trade-off between maximum power saving on one end and maximum performance on the other end.

The power saving profile can be a description of user equipment's 650 preference regarding the power consumption of the transceiver 690. The processor 660 and/or the operating system 668 in interaction with the applications determine the state of the user equipment 650 based on criteria such as user settings, user activity/inactivity (and how long it has continued), knowledge of applications that are running, expected traffic characteristic of the applications running, history of traffic characteristics dependent on time of day, calendar information based on time of day, location information, sensor parameter, and/or history of application-dependent traffic characteristics. Based on the state of the user equipment 650, user, and applications, the appropriate power saving profile for the user equipment 650 is determined. This power saving profile is signaled to the network element 610 by the user equipment 650. Upon receiving the power saving profile, the network (*e.g.,* a network element 610 such as a base station) may adjust its operation to take into account user equipment's 650 power saving profile. The network element 610 may adapt its operation to the user equipment's 650 power saving profile, for example, by changing the discontinuous reception configuration of the user equipment 650, by changing the inter-frequency measurements configuration of the user equipment 650, by changing the user equipment 650 to RRC IDLE mode or to RRC CONNECTED mode, by commanding handover to small cell or to macro cell (to save in measurements needed or transmit power), by scheduling the user equipment 650 in a way that saves power by activating discontinuous reception more often or in a way that maximizes performance regardless of discontinuous reception.

The power saving profile may include a set of user equipment 650 states that each indicates one trade-off between maximum power saving and maximum performance. As one example, there could be four states, one of which would be signaled by user equipment 650 to the serving network element 610. State 1 could be "maximum performance, no power saving", wherein the network element 610 would try to maximize the radio (*e.g.,* transceiver 690) performance without considering the power consumption of the user equipment 650. State 4 could be "maximum power saving, wherein the network element 610 would try to maximize battery life at the cost of performance (*e.g.,* possibly increased latency due to longer DRX cycle, possibly lower throughput). States 2 and 3 would be in between the two extremes. State 2 could be, for example, "emphasize performance, but try to save power," wherein the network element 610 would try to provide good performance, but taking into account that user equipment 650 has limited power resources. State 3 could be, for example, "maximum power saving for interactive traffic," wherein the network element 610 would try to save as much user equipment 650 power as possible, but still keep the latency low. Of course, any other number of states is possible and finer granularity could be easily defined.

Moreover, it is possible for the power saving profile to contain more detailed information on different aspects of network in general and user equipment 650 operation that it may affect. For example, the profile could contain a separate preferred power saving level for each of the aspects, separate discontinuous reception preference and inter-frequency measurement configuration, *etc.* The signaling may include a simple request regarding just one of these aspects (e.g., request of certain discontinuous reception parameters, or more general request discontinuous reception configuration according to the finite set of states described above).

A discontinuous reception profile is any characteristic that defines a communication state of the user equipment 650 such as a level of interaction with the transceiver 690 (at the radio layer) when the user equipment 650 is running an application and communicating with the network element 610. Of course, the user equipment 650 may run an application off-line without interacting with the transceiver 690 (at the radio layer). The discontinuous reception parameters generally describe transmission/reception communication resources available for communications from/to the user equipment 650.

In accordance with the user equipment 650, the processor 660 (*e.g.,* with the operating system 668) in accordance with the memory 670 is also configured to determine a power saving profile or state based on information obtained from the operating system 668 of the user equipment. The processor 660 (*e.g.,* with the operating system 668) in accordance with the memory 670 is also configured to provide the power saving profile via a signaling message to the serving network element 610.

In accordance with the user equipment 650, the processor 660 (*e.g.,* with the operating system 668) in accordance with the memory 670 is also configured to determine a power saving profile based on a state associated with ongoing traffic monitoring at a radio layer (the transceiver 690) and at least one of a user setting, a user activity/inactivity, an application running in the user equipment 650, an expected traffic characteristics associated with at least one application running, a history of traffic characteristics for communication dependent on a time of day, a user calendar information, a location information, a sensor parameter of the user equipment 650 and a history of application-dependent traffic characteristics. The processor 660 (*e.g.,* with the operating system 668) in accordance with the memory 670 is also configured to provide the power saving profile via a signaling message to the serving network element 610.

In accordance with the network element 610, the processor 620 (*e.g.,* with the operating system 628) in accordance with the memory 630 is configured to receive a power saving profile from a user equipment 650. The power saving profile may be disassociated from ongoing traffic monitoring at a radio layer (the transceiver 690) of the user equipment 650. The processor 620 in accordance with the memory 630 of the network element 610 is configured to select a discontinuous reception parameter(s) for the user equipment 650 dependent on the power saving profile, and provide the discontinuous reception parameter(s) for the user equipment 650. The processor 620 in accordance with the memory 630 of the network element 610 is also configured to provide the discontinuous reception parameter(s) in response to a query from the user equipment 650. Again, the power saving profile may be one of discontinuous reception profile that depends on factors as described herein.

In general, discontinuous reception parameters for a user equipment may be configured by a network element by monitoring the user equipment's traffic at a radio layer. However, it is difficult for the network element or even the user equipment based on examination of traffic that goes through the transceiver (or radio layer) to determine trade-offs (*e.g.,* optimize) for the user equipment that provide improvements in performance and battery life, because there is a lack of definite knowledge of the contents of the traffic or communications served.

User interaction with a user equipment may cause an increase in power consumption, for example, when the screen is brightened by a screen saver or by a user adjusting screen brightness. The user interactions with the user equipment, however, may also cause a decrease in power consumption (*e.g.,* when an application such as a web browser is closed). Sometimes no noticeable change in power consumption may be produced, such as when a short message service application is closed. Moreover, power consumption produced by an off-line application may be high even though the user is not interacting with the user equipment (*e.g.,* during an operation of some background application). Power consumption and user equipment activity have not been coupled in conventional approaches in a useful way so that discontinuous reception parameters can be established in response to user equipment activity and/or activity of user equipment applications.

The interactions between an operating system and/or applications running in the user equipment and radio layers are employed to obtain improved settings for discontinuous reception parameters from a serving network element such as a base station. These interactions provide a process for improving user equipment battery life by resulting in adjustments to the discontinuous reception parameters in accordance with a power saving profile (such as a discontinuous reception profile) from the user equipment. The discontinuous reception profile may depend on at least one of a user setting(s) of the user equipment, a user activity of the user equipment, an application running in the user equipment, an expected traffic characteristic associated with at least one application running in the user equipment, a history of traffic characteristics for communications of the user equipment dependent on a time of day such as the current time of day, calendar information of the user equipment based on a time of day such as the current time of day, location information of the user equipment, a sensor parameter of the user equipment, and a history of application-dependent traffic characteristics of the user equipment. In addition, past and predicted activities of user equipment applications can be used as a basis for the user equipment to make requests of a serving network element for adjustment of discontinuous reception parameters in accordance with a discontinuous reception profile from the user equipment. This is in contrast to traditional approaches of adjusting discontinuous reception parameters based on monitoring traffic at radio layers as the user equipment is being served. The process as described herein enables selection of the discontinuous reception parameters based on actions of the user equipment that predict future traffic changes. In this manner, the discontinuous reception parameters can be adjusted before changes in traffic actually take place.

In practice, the benefits of selecting the discontinuous reception parameters based, for instance, on user equipment activity and application operations can be realized by determining the relevant decision criteria within the user equipment, and providing the power saving profile (via a signaling mechanism) to a serving network element such as a base station. The serving network element ultimately configures the user equipment with selected discontinuous reception parameters. The sharing of the power saving profile and parameters between the user equipment and serving network element may employ new or existing interfaces therebetween.

Power savings can be achieved by adjusting several power saving settings (such as discontinuous reception settings). One set of power saving settings can be, for example, the discontinuous reception parameters specified in 3GPP LTE specifications. For example, the measurement interval for active listening time slots for the transceiver of the user equipment can be set. The operating system of the user equipment can determine a configuration of discontinuous reception parameters for the user equipment. However, the discontinuous reception parameters are often decided by the communication network, which may not be informed in conventional designs of user equipment preferences or of applications running in the user equipment. For this purpose, an interface may be employed between the operating system and transceiver or modem of the user equipment and, ultimately, a network element to provide the aforementioned preferences and activity of the user equipment. A possible implementation could be that some power saving profiles or states are standardized (*e.g.,* in radio resource control specification). The transceiver then provides an interface to the operating system such that the operating system of the user equipment can select/indicate one of the power saving profiles/states and the transceiver then signals the selected profile to the network element, for instance, using radio resource control signaling. Of course, other types of signaling such as non-access stratum ("NAS") signaling could be used as well.

Other than discontinuous reception parameters, further power saving mechanisms can be adjusted based on user equipment activity or inactivity as determined, for instance, by the operating system. One mechanism for adjustment is small cell mobility and detection-related measurement configurations. This information can be used for configuring a suitable inter-frequency measurement gap or other detection or mobility-related parameters. User inactivity or information of running applications in the user equipment can be employed to indicate to the network that macro connectivity (*e.g.,* connectivity to a macro cell) is preferred. Another example is selection of the radio access technology ("RAT") that will be used based on operating conditions in the user equipment.

Another power-saving mechanism is for the operating system to specifically request of the serving network element that the user equipment transceiver be set in a power saving mode, which can be signaled to the serving network element by the user equipment. In this manner, the serving network element is informed that the discontinuous reception parameters that provide improved power saving should be used until the user equipment returns to a normal mode. Such a request by the user equipment can avoid unnecessary signaling between the user equipment and the serving network element.

The operating system monitors and maintains information of at least one of the following operational conditions to set discontinuous reception parameters. One operational condition is how long the user equipment has been active or inactive. When the user equipment has been active, which action(s) the user is taking can be monitored. For example, starting and closing certain applications, locking and unlocking the user equipment screen, operation of certain keys, *etc.,* can be monitored. Future communication and operational needs can be predicted to some degree by the operating system when the user starts interacting with the user equipment. The discontinuous reception cycle could be progressively increased when inactivity continues. The pattern of recent or typical inactivity/activity periods can be used by the user equipment for predicting future activity. Examination of user equipment activity (such as starting a certain application) enables the user equipment to predict future traffic (such as a usage pattern, a stored history of traffic generated by each application, *etc*.) and reacting to changes in user equipment operation before they happen.

Another operational condition is the location of the user equipment (*e.g.,* at home, at work, *etc*.). A user equipment may have different profiles and preferences for work and for home usage. The user equipment could cluster location information (or identify a general location based on range to certain cell identification, WLAN applications, or Bluetooth devices, *etc*.) and store usage history for each cluster. Different power saving preferences such as discontinuous reception preferences can be then used for each location.

The currently active user profile or active user output channels can be monitored to set discontinuous reception parameters. For example, if the screen is dim and the user equipment is on silent profile, or if there is no speaker or headset output and vibration is not enabled, there is probably less need for low communication latency because the user is not getting or using any output from the user equipment. A less demanding and/or lower priority communication interface with a network element would provide satisfactory performance under such conditions.

Time of day can be monitored to set the power saving or discontinuous reception parameters. For example, the user equipment can be configured to favor battery saving at night. Time of day can be used not only to trigger power saving based on a certain hour, but based on a history of the user equipment's typical traffic activity at that time of day (or day of the week), or on the user equipment's calendar if available which would be more useful than just using time of day by itself. An implementation could set a radio (or transceiver) power saving preference independently of other device power saving preferences (*e.g.,* processor activity, screen activity or brightness, *etc*.).

An output from user equipment sensors can be monitored to set discontinuous reception parameters. For example, an accelerometer can signal if the user equipment has been or is moving, or a proximity sensor can signal if the user equipment is close to the user's head. As an additional feature, the operating system can use past and predicted activities of user equipment applications as a basis for adjusting the discontinuous reception parameters. For example, when applications are used, the operating system monitors the traffic generated by each application separately. Based on the observed traffic during an application run time, the operating system identifies, stores, and updates statistics and characteristics describing the traffic generated by that particular application.

The application traffic statistics and characteristics may include, for example, average data rate, reading time, and packet inter-arrival rate. Application characteristics may describe distributions of these measures or model estimated parameter values for a parametric model of the traffic arrival process. Knowing traffic characteristics of each application, the operating system can predict the aggregate traffic characteristics based on which applications are currently running by combining their respective statistics. The operating system may also predict the impact of starting or closing a certain application on overall traffic characteristics based on stored statistics that describe that particular application. Based on predicted overall traffic arrival and, optionally, knowledge of tolerated latency for each application, a discontinuous reception pattern or power saving mode can be requested.

Alternatively, the applications may directly indicate their delay requirements and an expected amount of data that will be generated. Expected traffic burstiness can be indicated, for example, when a network connection is opened. The operating system collects and combines this information from multiple applications, summing the total expected data rate and taking the tightest latency requirement, and requests from the network element the appropriate discontinuous reception parameters be set. Optionally, the network element can influence the resulting discontinuous reception parameters, depending on cell load, cell capacity, link quality, user class, *etc.* Accordingly, the combined information (data rate, latency, *etc*.) could be signaled to the network element, where the selection of appropriate discontinuous reception parameters can be made.

The setting of the discontinuous reception parameters as described hereinabove with knowledge of available power saving options supported by the user equipment, the network element can allow the operating system to trade off (*e.g.,* optimize) user equipment performance versus battery life according to user equipment needs. For example, when monitored information indicates that the user equipment is less likely to need a low latency network connection, the operating system can indicate this to the user equipment radio layer (the transceiver), which can then signal this information to the network element. If the radio power saving setting can be adjusted directly by the user equipment without negotiating with the network element (*e.g.,* if the user equipment can autonomously select a measurement interval for discontinuous reception), then the action can be taken directly by the user equipment based on an indication received from the operating system. This presents a possibility to employ a relatively complex process for selecting the discontinuous reception parameters based on, for example, adapting a process to the user equipment activity and an application. After the network element configures the user equipment with new discontinuous reception parameters, it can signal the changed setting to the operating system, or the operating system can query (or be signaled) the selected discontinuous reception parameters that was configured by the network element. In this manner, the user equipment can adapt its behavior to the given settings.

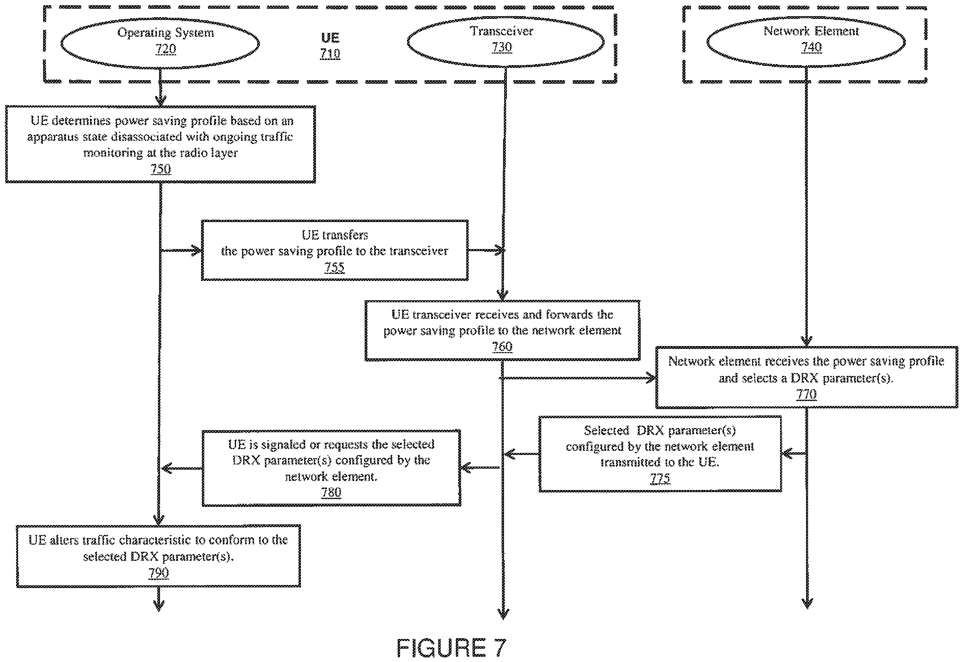

Turning now to FIGURE 7, illustrated is a flow diagram of an embodiment of a method of operating a communication system in accordance with the principles of some embodiments of the present invention. The user equipment 710 includes an operating system 720 and a transceiver 730 (at the radio layer). A network element 740 (*e.g.,* a base station) serves the user equipment 710.

The method begins in a step or module 750. In step or module 750, the user equipment determines a power saving profile based on a state of the user equipment. The state may be disassociated from ongoing traffic monitoring at a radio layer (the transceiver 730). Traffic monitoring for its communication includes ongoing and existing traffic. The power saving profile may be one of discontinuous reception profile that may depend on at least one of a user setting of the user equipment, a user activity of the user equipment, an application running in the user equipment, an expected traffic characteristic associated with at least one application running in the user equipment, a history of traffic characteristics for communications of the user equipment dependent on a time of day, calendar information of the user equipment based on a time of day, location information of the user equipment, a sensor parameter of the user equipment, and a history of application-dependent traffic characteristics of the user equipment.

Selection of a power saving profile that would result, for instance, in a reconfiguration of user equipment discontinuous reception parameters can be requested by the user equipment even before an actual need arises. In step or module 755, the user equipment 710 transfers the power saving profile to the transceiver 730. In step or module 760, the transceiver 730 forwards (via a signaling message) the power saving profile over a wireless communication path to its serving network element 740. In step or module 770, the serving network element 740 processes the signaled profile received from the user equipment and selects a discontinuous reception parameter(s) or other power saving parameters for the user equipment 710.

In step or module 775, the serving network element 740 transmits to the user equipment transceiver 730 the selected discontinuous reception parameter(s) or other power saving parameters that it configured for the user equipment (*e.g.,* in response to a request from the user equipment 710). In accordance with step or module 775, the transceiver 730 may receive a defined a scanning pattern, an interval, a frequency, or a configuration for interfrequency measurements based on the power saving profile for selection by the user equipment 710. In step or module 780, the user equipment transceiver 730 transfers within the user equipment the selected discontinuous reception parameter(s) that was configured by the serving network element 740. In step or module 790, the user equipment 710 may alter at least one traffic characteristic (which may be initiated by an application running therein) to conform to the selected discontinuous reception parameter(s) configured by the serving network element 740.

Depending on the implementation of the process for selecting discontinuous reception parameters, a detailed information exchange can be established between the operating system and transceiver of the user equipment, and between the user equipment (via the transceiver) and the serving network (*e.g.,* having 2 milliseconds ("ms") of activity every 100 ms, or generating 200 kilobytes ("kB") of data every 100 ms with a delay tolerance of 50 ms, *etc*.). A more coarse indication of a needed power saving profile (*e.g.,* discontinuous reception profile) quantized to few levels, and/or an indication that a current setting is not satisfactory in terms of performance or battery life can be exchanged among these elements. It is difficult to deduce a preferred power saving (*e.g.,* discontinuous reception) configuration from just the traffic going through a user equipment because there can be differences in delay tolerances depending on an application running in the user equipment, such as the time a user is staring at a blank user equipment screen, or other factors that are difficult to anticipate.

The interface between the processor (and an operating system) and transceiver of the user equipment may employ some standard interface, or alternatively, an interface tailored to the specific design of a user equipment. Signaling between the transceiver of the user equipment and the network element could be implemented as radio resource control ("RRC") signaling such as a discontinuous reception configuration request. The message could contain message fields that may be employed to indicate power saving (*e.g.,* discontinuous reception) needs of the user equipment. The selected discontinuous reception parameters can be communicated to the user equipment by using an existing "RRCreconfiguration" message. However, if new discontinuous reception parameters are needed, then new message content may be employed. Alternatively, the signaling could utilize non-access stratum signaling between user equipment 710 and a network control element to convey the power saving profile or request to the network element.

In user equipment (*e.g.,* smartphones) there can be various always-on applications running in the background, even if the user is not actively interacting with the user equipment (e.g., an e-mail client or various home screen widgets). Therefore, a user equipment with always-on applications running would not transition to an idle state because there is continuing (low-level) traffic. In such cases, the discontinuous reception parameters can be configured with a shorter cycle when the user is interacting with the user equipment, and with a longer cycle when the user is inactive. After being inactive, when the user starts interacting with the user equipment again, the discontinuous reception parameters can be changed (*e.g.,* upon opening a user equipment key lock or starting a web browser in the user equipment). If the user equipment is idle, it can initiate a connection faster with the network element based on input of its processor (including the operation system thereof) instead of waiting until the traffic is generated. This would provide an improved response time for the user equipment while still enabling a discontinuous reception parameter configuration for battery saving.

The operating system (*e.g.,* operating system 628 illustrated in FIGURE 6) of the user equipment can determine when the user interacts with the user equipment, the time of day, and which applications are running as well as the user equipment's configured settings or preferences. Consequently, valuable input and feedback for a preferred radio power saving (*e.g.,* discontinuous reception) configuration can be provided to a network element, which can provide a better match to the needs of the user equipment. A more flexible setting of the discontinuous reception parameters can be achieved. This can produce improved battery life and application performance in terms of latency and throughput. The network element or the user equipment at radio layers are not able to deduce the same information by monitoring just the flow of traffic.

The reaction time to user equipment's actions can be shortened because the negotiation procedure between the user equipment and the network element can be started immediately when the user equipment (or operating system thereof) detects a need to alter the discontinuous reception parameters, even before the actual transmission of data starts by utilizing, for instance, an application launch time. For example, when the user clicks a browser icon, signaling for a browser profile can be initiated by the operating system so that the new discontinuous reception parameter configuration is ready at once when the application is ready and the real browsing session starts.

Program or code segments making up the various embodiments of the present invention may be stored in a computer readable medium or transmitted by a computer data signal embodied in a carrier wave, or a signal modulated by a carrier, over a transmission medium. For instance, a computer program product including a program code stored in a computer readable medium (*e.g.,* a non-transitory computer readable medium) may form various embodiments of the present invention. The "computer readable medium" may include any medium that can store or transfer information. Examples of the computer readable medium include an electronic circuit, a semiconductor memory device, a read only memory ("ROM"), a flash memory, an erasable ROM ("EROM"), a floppy diskette, a compact disk ("CD")-ROM, an optical disk, a hard disk, a fiber optic medium, a radio frequency ("RF") link, and the like. The computer data signal may include any signal that can propagate over a transmission medium such as electronic communication network communication channels, optical fibers, air, electromagnetic links, RF links, and the like. The code segments may be downloaded via computer networks such as the Internet, Intranet, and the like.

As described above, the exemplary embodiment provides both a method and corresponding apparatus consisting of various modules providing functionality for performing the steps of the method. The modules may be implemented as hardware (embodied in one or more chips including an integrated circuit such as an application specific integrated circuit), or may be implemented as software or firmware for execution by a computer processor. In particular, in the case of firmware or software, the exemplary embodiment can be provided as a computer program product including a computer readable storage structure embodying computer program code (*i.e.,* software or firmware) thereon for execution by the computer processor.

Although some embodiments of the present invention have been described in detail, it should be understood that various changes, substitutions and alterations can be made herein without departing from the scope of the invention as defined by the appended claims. For example, many of the features and functions discussed above can be implemented in software, hardware, or firmware, or a combination thereof. Also, many of the features, functions and steps of operating the same may be reordered, omitted, added, *etc.,* and still fall within the broad scope of the present invention.

## Claims

1. A method, comprising:
determining (750) a power saving profile based on a state of a user equipment;
providing (760) said power saving profile via a signaling message to a serving network element, wherein said power saving profile indicates either a preference for less emphasis on power saving and more emphasis on performance, or a preference for more emphasis on power saving and less emphasis on performance, and
**characterised in that** said power saving profile is a discontinuous reception profile and said discontinuous reception profile depends on at least one of: a user setting of the user equipment, a user activity or inactivity, an application running in the user equipment, an expected traffic characteristic associated with the application running in the user equipment, a history of traffic characteristics for communication dependent on a time of day, a user calendar information, a location information, a sensor parameter of the user equipment and a history of application-dependent traffic characteristics of the user equipment.

2. The method as recited in Claim 1, wherein said power saving profile indicates a trade-off between maximum power saving on one end and maximum performance on the other end.

3. The method as recited in any of Claims 1 to 2, wherein said performance indicates at least one of lower latency, higher throughput and less emphasis on power saving.

4. The method as recited in any of Claims 1 to 3, wherein said state of the user equipment depends on at least one of:
a user setting of said user equipment;
a user activity of said user equipment;
an application running in said user equipment;
an expected traffic characteristic associated with at least one application running in said user equipment;
a history of traffic characteristics for communications of said user equipment dependent on a time of day;
calendar information of said user equipment based on a time of day;
location information of said user equipment;
a sensor parameter of said user equipment; and
a history of application-dependent traffic characteristics of said user equipment.

5. The method as recited in any of Claims 1 to 4, wherein said state of the user equipment is determined based on an interaction between at least one of an operating system, an application and said radio layer of said user equipment.

6. The method as recited in any of Claims 1 to 5 further comprising selecting a scanning pattern, an interval, a frequency, or a configuration for interfrequency measurements based on said power saving profile.

7. The method as recited in any of Claims 1 to 6 further comprising receiving (775) a discontinuous reception parameter from said serving network element in response to said power saving profile and altering (790) at least one traffic characteristic of said user equipment to conform to said discontinuous reception parameter.

8. The method as recited in any of Claims 1 to 7 further comprising receiving, for interfrequency measurements, a defined scanning pattern, an interval, a frequency, or a configuration from said serving network element in response to said power saving profile.

9. The method as recited in any of Claims 1 to 8 further comprising receiving, at least in part in response to said providing of said power saving profile, an instruction to transition to a radio resource control, RRC, idle or RRC connected mode.

10. An apparatus (640, 680), comprising:
means for determining (750) a power saving profile based on a state of a user equipment;
means for providing (760) said power saving profile via a signaling message to a serving network element, wherein said power saving profile indicates either a preference for less emphasis on power saving and more emphasis on performance, or a preference for more emphasis on power saving and less emphasis on performance, and
**characterised in that** said power saving profile is a discontinuous reception profile and said discontinuous reception profile depends on at least one of: a user setting of the user equipment, a user activity or inactivity, an application running in the user equipment, an expected traffic characteristic associated with the application running in the user equipment, a history of traffic characteristics for communication dependent on a time of day, a user calendar information, a location information, a sensor parameter of the user equipment and a history of application-dependent traffic characteristics of the user equipment.

11. An apparatus (640, 680) according to claim 10, further comprising:
means (645, 625) for performing the method according to any one of claims 2 to 9.

12. A computer program product embodied on a distribution medium readable by a computer and comprising program instructions which, when loaded into an apparatus, execute a method comprising:
determining (750) a power saving profile based on a state of a user equipment;
providing (760) said power saving profile via a signaling message to a serving network element, wherein said power saving profile indicates either a preference for less emphasis on power saving and more emphasis on performance, or a preference for more emphasis on power saving and less emphasis on performance, and
**characterised in that** said power saving profile is a discontinuous reception profile and said discontinuous reception profile depends on at least one of: a user setting of the user equipment, a user activity or inactivity, an application running in the user equipment, an expected traffic characteristic associated with the application running in the user equipment, a history of traffic characteristics for communication dependent on a time of day, a user calendar information, a location information, a sensor parameter of the user equipment and a history of application-dependent traffic characteristics of the user equipment.

13. A computer program product according to claim 12, further comprising program instructions which, when loaded into an apparatus, execute a method according to any one of claims 2 to 9.

## Patentansprüche

1. Verfahren, umfassend:
Bestimmen (750) eines Energiesparprofils auf der Grundlage eines Zustands eines Benutzergeräts;
Bereitstellen (760) des Energiesparprofils über eine Signalisierungsnachricht an ein bedienendes Netzwerkelement, wobei das Energiesparprofil entweder eine Präferenz für geringere Betonung von Energieeinsparung und stärkere Betonung von Leistung oder eine Präferenz für stärkere Betonung von Energieeinsparung und geringere Betonung von Leistung angibt, und
**dadurch gekennzeichnet, dass** das Energiesparprofil ein Profil für diskontinuierlichen Empfang ist und das Profil für diskontinuierlichen Empfang von mindestens einem der folgenden Elemente abhängt: einer Benutzereinstellung des Benutzergeräts, einer Aktivität oder einer Inaktivität eines Benutzers, einer Anwendung, die im Benutzergerät ausgeführt wird, einer erwarteten Datenverkehrscharakteristik, die der im Benutzergerät ausgeführten Anwendung zugeordnet ist, einer Historie von Datenverkehrscharakteristiken für Kommunikation in Abhängigkeit von einer Tageszeit, einer Benutzer-Kalenderinformation, einer Standortinformation, einem Sensorparameter des Benutzergeräts und einer Historie von anwendungsabhängigen Datenverkehrscharakteristiken des Benutzergeräts.

2. Verfahren nach Anspruch 1, wobei das Energiesparprofil einen Kompromiss zwischen maximaler Energieeinsparung an einem Ende und maximaler Leistung am anderen Ende angibt.

3. Verfahren nach einem der Ansprüche 1 bis 2, wobei die Leistung mindestens eines von niedrigerer Latenz, höherem Durchsatz und geringerer Betonung von Energieeinsparung angibt.

4. Verfahren nach einem der Ansprüche 1 bis 3, wobei der Zustand des Benutzergeräts von mindestens einem der folgenden Elemente abhängt:
einer Benutzereinstellung des Benutzergeräts;
einer Benutzeraktivität des Benutzergeräts;
einer Anwendung, die im Benutzergerät ausgeführt wird;
einer erwarteten Datenverkehrscharakteristik, die mindestens einer Anwendung, die im Benutzergerät ausgeführt wird, zugeordnet ist;
einer Historie von Datenverkehrscharakteristiken für die Kommunikation des Benutzergeräts in Abhängigkeit von der Tageszeit;
Kalenderinformationen des Benutzergeräts auf der Grundlage einer Tageszeit;
Standortinformationen des Benutzergeräts;
eines Sensorparameters des Benutzergeräts;
einer Historie von anwendungsabhängigen Datenverkehrscharakteristiken des Benutzergeräts.

5. Verfahren nach einem der Ansprüche 1 bis 4, wobei der Zustand des Benutzergeräts auf der Grundlage einer Interaktion zwischen mindestens einem von einem Betriebssystem, einer Anwendung und der Funkschicht des Benutzergeräts bestimmt wird.

6. Verfahren nach einem der Ansprüche 1 bis 5, ferner umfassend das Auswählen eines Abtastmusters, eines Intervalls, einer Frequenz oder einer Auslegung für Interfrequenzmessungen auf der Grundlage des Energiesparprofils.

7. Verfahren nach einem der Ansprüche 1 bis 6, ferner umfassend das Empfangen (775) eines Parameters für diskontinuierlichen Empfang vom bedienenden Netzwerkelement als Reaktion auf das Energiesparprofil und Ändern (790) zumindest einer Datenverkehrscharakteristik des Benutzergeräts, um dem Parameter für diskontinuierlichen Empfang zu entsprechen.

8. Verfahren nach einem der Ansprüche 1 bis 7, ferner umfassend das Empfangen, für Interfrequenzmessungen, eines definierten Abtastmusters, eines Intervalls, einer Frequenz oder einer Auslegung vom bedienenden Netzwerkelement als Reaktion auf das Energiesparprofil.

9. Verfahren nach einem der Ansprüche 1 bis 8, ferner umfassend das Empfangen, zumindest teilweise als Reaktion auf das Bereitstellen des Energiesparprofils, einer Anweisung zum Übergang in einen Funkressourcensteuerungs-(engl. Radio Resource Control)-, RRC, -Leerlauf- oder RRC-Verbindungsmodus.

10. Vorrichtung (640, 680), umfassend:
Mittel zum Bestimmen (750) eines Energiesparprofils auf der Grundlage eines Zustands eines Benutzergeräts;
Mittel zum Bereitstellen (760) des Energiesparprofils über eine Signalisierungsnachricht an ein bedienendes Netzwerkelement, wobei das Energiesparprofil entweder eine Präferenz für geringere Betonung von Energieeinsparung und stärkere Betonung von Leistung oder eine Präferenz für stärkere Betonung von Energieeinsparung und geringere Betonung von Leistung angibt, und
**dadurch gekennzeichnet, dass** das Energiesparprofil ein Profil für diskontinuierlichen Empfang ist und das Profil für diskontinuierlichen Empfang von mindestens einem der folgenden Elemente abhängt: einer Benutzereinstellung des Benutzergeräts, einer Aktivität oder einer Inaktivität eines Benutzers, einer Anwendung, die im Benutzergerät ausgeführt wird, einer erwarteten Datenverkehrscharakteristik, die der im Benutzergerät ausgeführten Anwendung zugeordnet ist, einer Historie von Datenverkehrscharakteristiken für Kommunikation in Abhängigkeit von einer Tageszeit, einer Benutzer-Kalenderinformation, einer Standortinformation, einem Sensorparameter des Benutzergeräts und einer Historie von anwendungsabhängigen Datenverkehrscharakteristiken des Benutzergeräts.

11. Vorrichtung (640, 680) nach Anspruch 10, ferner umfassend:
Mittel (645, 625) zum Durchführen des Verfahrens nach einem der Ansprüche 2 bis 9.

12. Computerprogrammprodukt, das auf einem von einem Computer lesbaren Verteilungsmedium verkörpert ist und Programmanweisungen umfasst, die, wenn sie in eine Vorrichtung geladen werden, ein Verfahren durchführen, das Folgendes umfasst:
Bestimmen (750) eines Energiesparprofils auf der Grundlage eines Zustands eines Benutzergeräts;
Bereitstellen (760) des Energiesparprofils über eine Signalisierungsnachricht an ein bedienendes Netzwerkelement, wobei das Energiesparprofil entweder eine Präferenz für geringere Betonung von Energieeinsparung und stärkere Betonung von Leistung oder eine Präferenz für stärkere Betonung von Energieeinsparung und geringere Betonung von Leistung angibt, und
**dadurch gekennzeichnet, dass** das Energiesparprofil ein Profil für diskontinuierlichen Empfang ist und das Profil für diskontinuierlichen Empfang von mindestens einem der folgenden Elemente abhängt: einer Benutzereinstellung des Benutzergeräts, einer Aktivität oder einer Inaktivität eines Benutzers, einer Anwendung, die im Benutzergerät ausgeführt wird, einer erwarteten Datenverkehrscharakteristik, die der im Benutzergerät ausgeführten Anwendung zugeordnet ist, einer Historie von Datenverkehrscharakteristiken für Kommunikation in Abhängigkeit von einer Tageszeit, einer Benutzer-Kalenderinformation, einer Standortinformation, einem Sensorparameter des Benutzergeräts und einer Historie von anwendungsabhängigen Datenverkehrscharakteristiken des Benutzergeräts.

13. Computerprogrammprodukt nach Anspruch 12, ferner umfassend Programmanweisungen, die, wenn sie in eine Vorrichtung geladen werden, ein Verfahren nach einem der Ansprüche 2 bis 9 durchführen.

## Revendications

1. Procédé, comprenant :
la détermination (750) d'un profil d'économie d'énergie sur la base d'un état d'un équipement utilisateur ;
la fourniture (760) dudit profil d'économie d'énergie par l'intermédiaire d'un message de signalisation à un élément de réseau de desserte, ledit profil d'économie d'énergie indiquant soit une préférence pour moins d'importance à l'économie d'énergie et plus d'importance à la performance, soit une préférence pour plus d'importance à l'économie d'énergie et moins d'importance à la performance, et
**caractérisé en ce que** ledit profil d'économie d'énergie est un profil de réception discontinue et ledit profil de réception discontinue dépend d'au moins un d'un réglage d'utilisateur de l'équipement utilisateur, d'une activité ou inactivité d'utilisateur, d'une application exécutée dans l'équipement utilisateur, d'une caractéristique de trafic prévue associée à l'application exécutée dans l'équipement utilisateur, d'un historique de caractéristiques de trafic pour la communication dépendant de l'heure de la journée, d'informations de calendrier d'utilisateur, d'informations d'emplacement, d'un paramètre de capteur de l'équipement utilisateur et d'un historique de caractéristiques de trafic dépendant de l'application de l'équipement utilisateur.

2. Procédé selon la revendication 1, dans lequel ledit profil d'économie d'énergie indique un compromis entre une économie d'énergie maximale d'une part et une performance maximale d'autre part.

3. Procédé selon l'une quelconque des revendications 1 à 2, dans lequel ladite performance indique au moins un d'une latence inférieure, d'un rendement supérieur et d'une importance moindre de l'économie d'énergie.

4. Procédé selon l'une quelconque des revendications 1 à 3, dans lequel ledit état de l'équipement utilisateur dépend d'au moins un :
d'un réglage d'utilisateur dudit équipement utilisateur ;
d'une activité d'utilisateur dudit équipement utilisateur ;
d'une application exécutée dans ledit équipement utilisateur ;
d'une caractéristique de trafic prévue associée à au moins une application exécutée dans ledit équipement utilisateur ;
d'un historique de caractéristiques de trafic pour les communications dudit équipement utilisateur en fonction d'une heure de la journée ;
d'informations de calendrier dudit équipement utilisateur sur la base d'une heure de la journée ;
d'informations d'emplacement dudit équipement utilisateur ;
d'un paramètre de capteur dudit équipement utilisateur ; et
d'un historique de caractéristiques de trafic dépendant de l'application dudit équipement utilisateur.

5. Procédé selon l'une quelconque des revendications 1 à 4, dans lequel ledit état de l'équipement utilisateur est déterminé sur la base d'une interaction entre au moins un d'un système d'exploitation, d'une application et de ladite couche radio dudit équipement utilisateur.

6. Procédé selon l'une quelconque des revendications 1 à 5 comprenant en outre la sélection d'une configuration de balayage, d'un intervalle, d'une fréquence, ou d'une configuration de mesures inter-fréquences sur la base dudit profil d'économie d'énergie.

7. Procéder selon l'une quelconque des revendications 1 à 6 comprenant en outre la réception (775) d'un paramètre de réception discontinue en provenance dudit élément de réseau de service en réponse audit profil d'économie d'énergie et la modification (790) d'au moins une caractéristique de trafic dudit équipement utilisateur pour qu'elle soit conforme audit paramètre de réception discontinue.

8. Procédé selon l'une quelconque des revendications 1 à 7 comprenant en outre la réception, pour des mesures inter-fréquences, d'une configuration de balayage définie, d'un intervalle, d'une fréquence ou d'une configuration en provenance dudit élément de réseau de service en réponse audit profil d'économie d'énergie.

9. Procédé selon l'une quelconque des revendications 1 à 8 comprenant en outre la réception, au moins en partie en réponse à ladite fourniture dudit profil d'économie d'énergie, d'une instruction pour passer à un mode de commande ressource radio, RRC, inactif ou à un mode RRC connecté.

10. Appareil (640, 680), comprenant :
un moyen de détermination (750) d'un profil d'économie d'énergie sur la base d'un état d'un équipement utilisateur ;
un moyen de fourniture (760) dudit profil d'économie d'énergie par l'intermédiaire d'un message de signalisation à un élément de réseau de desserte, ledit profil d'économie d'énergie indiquant soit une préférence pour moins d'importance à l'économie d'énergie et plus d'importance à la performance, soit une préférence pour plus d'importance à l'économie d'énergie et moins d'importance à la performance, et
**caractérisé en ce que** ledit profil d'économie d'énergie est un profil de réception discontinue et ledit profil de réception discontinue dépend d'au moins un d'un réglage d'utilisateur de l'équipement utilisateur, d'une activité ou inactivité d'utilisateur, d'une application exécutée dans l'équipement utilisateur, d'une caractéristique de trafic prévue associée à l'application exécutée dans l'équipement utilisateur, d'un historique de caractéristiques de trafic pour la communication dépendant de l'heure de la journée, d'informations de calendrier d'utilisateur, d'informations d'emplacement, d'un paramètre de capteur de l'équipement utilisateur et d'un historique de caractéristiques de trafic dépendant de l'application de l'équipement utilisateur.

11. Appareil (640, 680) selon la revendication 10, comprenant en outre :
des moyens (645, 625) pour mettre en œuvre le procédé selon l'une quelconque des revendications 2 à 9.

12. Produit-programme informatique intégré sur un support de distribution lisible par un ordinateur comprenant des instructions de programme qui, à leur chargement dans un appareil, exécutent un procédé comprenant :
la détermination (750) d'un profil d'économie d'énergie sur la base d'un état d'un équipement utilisateur ;
la fourniture (760) dudit profil d'économie d'énergie par l'intermédiaire d'un message de signalisation à un élément de réseau de desserte, ledit profil d'économie d'énergie indiquant soit une préférence pour moins d'importance à l'économie d'énergie et plus d'importance à la performance, soit une préférence pour plus d'importance à l'économie d'énergie et moins d'importance à la performance, et
**caractérisé en ce que** ledit profil d'économie d'énergie est un profil de réception discontinue et ledit profil de réception discontinue dépend d'au moins un d'un réglage d'utilisateur de l'équipement utilisateur, d'une activité ou inactivité d'utilisateur, d'une application exécutée dans l'équipement utilisateur, d'une caractéristique de trafic prévue associée à l'application exécutée dans l'équipement utilisateur, d'un historique de caractéristiques de trafic pour la communication dépendant de l'heure de la journée, d'informations de calendrier d'utilisateur, d'informations d'emplacement, d'un paramètre de capteur de l'équipement utilisateur et d'un historique de caractéristiques de trafic dépendant de l'application de l'équipement utilisateur.

13. Produit-programme informatique selon la revendication 12, comprenant en outre des instructions de programme qui, à leur chargement dans un appareil, exécutent un procédé selon l'une quelconque des revendications 2 à 9.
